# EUROPÄISCHE PATENTSCHRIFT

(11) **EP 0 903 374 B1**
(45) Veröffentlichungstag und Bekanntmachung des Hinweises auf die Patenterteilung: **27.10.2004**
(21) Anmeldenummer: 98115788.6
(22) Anmeldetag: 21.08.1998
(51) Int. Cl.: C08L 23/06, C08J 5/18

(54) **Kunststoff-Folie**
Plastic film
Feuille plastique

(30) Priorität: 23.09.1997 DE 19741813
(43) Veröffentlichungstag der Anmeldung: 24.03.1999
(73) Patentinhaber: Huhtamaki Forchheim Zweigniederlassung der Huhtamaki Deutschland GmbH & Co. KG, 91301 Forchheim (DE)
(72) Erfinder: Müller, Josef, 91330 Eggolsheim (DE)
(74) Vertreter: Hutzelmann, Gerhard

(56) Entgegenhaltungen:
- EP-A- 0 067 550
- EP-A- 0 241 234
- EP-A- 0 844 258
- US-A- 4 367 841

## Beschreibung

Die Erfindung bezieht sich auf eine Kunststoff-Folie aus einer Mischung aus LDPE und LLDPE die im Blasverfahren hergestellt ist.

Aus der US 4,367,841 ist eine Folie aus einer Mischung von 10-40 Gew.-% LLDPE mit einer Dichte kleiner 0.940g/cm³ und 60-90Gew.% LDPE mit einer Dichte kleiner 0,930g/cm³ und mit einer Dicke von 4,5µm oder weniger bekannt, die dort zur Herstellung von Tragetaschen eingesetzt wird.

Derartige Folien werden vorwiegend als Rückseitenfolie für Windeln und Damenbinden eingesetzt.

Um die dafür notwendigen Eigenschaften zu erhalten mußte eine Folie mit einer Dicke von etwa 25 µm hergestellt werden.

Der Erfindung liegt die Aufgabe zugrunde, eine Folie mit vergleichbaren Eigenschaften herzustellen, die kostengünstiger zu erzeugen ist.

Diese Aufgabe wird erfindungsgemäß dadurch gelöst, daß das verwendete LDPE eine Dichte von 0,918 bis 0,924 g/cm³ und einen Schmelzindex von 0,6 bis 1,2 aufweist, während das LLDPE eine mittlere Dichte hat, die größer als 0,935 g/cm³ ist, wobei die fertige Folie eine Dicke von 12 bis 15µm aufweist und ein Mischungsverhältnis LDPE zu LLDPE von 50 zu 50 bis 70 zu 30 Gewichts-% vorliegt.

Hierdurch ist es möglich, bei Erhaltung der wichtigen Eigenschaften wie Festigkeit, Wärmestabilität oder Maschinengängigkeit eine erhebliche Reduzierung der Foliendicke vorzunehmen.

Als sehr günstig hat es sich dabei erwiesen, wenn gemäß einer vorteilhaften Ausgestaltung der Erfindung ein C6 oder C8 LLDPE eingesetzt wird.

Ebenfalls sehr günstig ist es, wenn das LLDPE einen Schmelzindex von 0,8 bis 1,8 aufweist.

Eine ebenfalls sehr vorteilhafte Ausgestaltung der Erfindung liegt darin, daß die Folien-Oberfläche mit einer Mikroprägung versehen ist.

Hierdurch wird eine matte Oberfläche der Folie erzeugt.

Als Rückseitenmaterial werden bei Damenbinden und Windeln Kunststoff-Folien aus LDPE und LLDPE verwendet. Beim Gegenstand der vorliegenden Erfindung hat das dabei verwendete LDPE eine Dichte von 0,918 bis 0,924 g/cm³ und einen Schmelzindex von 0,6 bis 1,2; das LLDPE weist dagegen eine mittlere Dichte auf, die größer als 0,935 g/cm³ ist. LDPE und LLDPE liegen dabei in einem Mischungsverhältnis von 50 zu 50 bis 70 zu 30 Gewichts-% vor. Dadurch ist es möglich die Foliendicke von bisher 25 µm auf 15 µm zu reduzieren, ohne daß dabei wesentliche Einschränkungen der Eigenschaften hingenommen werden müßten.

Lediglich die Durchstoßfestigkeit ist leicht verringert, was aber beim vorgesehenen Einsatzzweck keine Bedeutung hat.

Die Folie wird im Blasverfahren hergestellt, wodurch eine sehr effektive Herstellung erreicht ist.

Gegenüber der bisher notwendigen Foliendicke von 25 µm wird somit eine Materialersparnis von 40 % erzielt.

## Patentansprüche

1. Kunststoff-Folie aus einer Mischung aus LDPE und LLDPE, die im Blasverfahren hergestellt ist, **dadurch gekennzeichnet, daß** das verwendete LDPE eine Dichte von 0,918 bis 0,924 g/cm³ und einen Schmelzindex von 0,6 bis 1,2 aufweist, während das LLDPE eine mittlere Dichte hat, die größer als 0,935 g/cm³ ist, wobei die fertige Folie eine Dicke von 12 bis 15 µm aufweist und ein Mischungsverhältnis LDPE zu LLDPE von 50 zu 50 bis 70 zu 30 Gewichts-% vorliegt.

2. Kunststoff-Folie nach Anspruch 1, **dadurch gekennzeichnet, daß** ein C6 oder C8 LLDPE eingesetzt wird.

3. Kunststoff-Folie nach Anspruch 1 oder 2, **dadurch gekennzeichnet, daß** das LLDPE einen Schmelzindex von 0,8 bis 1,8 aufweist.

4. Kunststoff-Folie nach einem der vorhergehenden Ansprüche, **dadurch gekennzeichnet, daß** die Folien-Oberfläche mit einer Mikroprägung versehen ist.

## Claims

1. Plastic film consisting of a blend of LDPE and LLDPE that is produced by the blowing process, wherein the LDPE used has a density of 0.918 to 0.924 g/cm³ and a melt index of 0.6 to 1.2, while the LLDPE has an average density that is higher than 0.935 g/cm³, the finished film having a thickness of 12 to 15 µ and the LDPE-to-LLDPE mixing ratio being between 50 to 50 and 70 to 30% by weight.

2. Plastic film according to claim 1, wherein a C6 or C8 LLDPE is used.

3. Plastic film according to claim 1 or 2, wherein the LLDPE has a melt index of 0.8 to 1.8.

4. Plastic film according to one of the previous claims, wherein the film surface is provided with micro-embossing.

## Revendications

1. Feuille plastique composée d'un mélange de LDPE et de LLDPE qui est fabriquée selon un procédé de soufflage, **caractérisée en ce que** le LDPE utilisé présente une densité de 0,918 à 0,924 g/cm³ et un indice de fusion de 0,6 à 1,2, alors que le LLDPE a une densité moyenne qui est supérieure à 0,935 g/cm³, la feuille finie présentant une épaisseur comprise entre 12 et 15 µm et un rapport de mélange entre LDPE et LLDPE compris entre 50:50 et 70:30 % en masse.

2. Feuille plastique selon la revendication 1, **caractérisée en ce que** l'on utilise un LLDPE en C6 ou C8.

3. Feuille plastique selon la revendication 1 ou 2, **caractérisée en ce que** le LLDPE présente un indice de fusion compris entre 0,8 et 1,8.

4. Feuille plastique selon l'une des revendications précédentes, **caractérisée en ce que** la surface de la feuille est pourvue d'un micro-estampage.
